(19) Europäisches Patentamt
European Patent Office
Office européen des brevets

(11) **EP 1 305 876 B1**

(12) **EUROPÄISCHE PATENTSCHRIFT**

(45) Veröffentlichungstag und Bekanntmachung des Hinweises auf die Patenterteilung:
**19.10.2011  Patentblatt 2011/42**

(51) Int Cl.:
*H02P 9/48* *(2006.01)*       *H02P 25/02* *(2006.01)*
*H02P 21/00* *(2006.01)*     *H02P 9/30* *(2006.01)*

(21) Anmeldenummer: **01944964.4**

(22) Anmeldetag: **31.05.2001**

(86) Internationale Anmeldenummer:
**PCT/DE2001/002063**

(87) Internationale Veröffentlichungsnummer:
**WO 2002/009266 (31.01.2002 Gazette 2002/05)**

(54) **VERFAHREN ZUR REGELUNG EINER ELEKTRISCHEN MASCHINE MIT PULSWECHSELRICHTER**

METHOD FOR CONTROLLING AN ELECTRICAL MACHINE BY MEANS OF A PULSE-WIDTH MODULATION INVERTER

PROCEDE POUR REGULER UNE MACHINE ELECTRIQUE AU MOYEN D'UN ONDULEUR PULSE

(84) Benannte Vertragsstaaten:
**DE ES FR GB IT**

(30) Priorität: **25.07.2000  DE 10036099**

(43) Veröffentlichungstag der Anmeldung:
**02.05.2003  Patentblatt 2003/18**

(73) Patentinhaber: **ROBERT BOSCH GMBH**
**70442 Stuttgart (DE)**

(72) Erfinder: **REUTLINGER, Kurt**
**70174 Stuttgart (DE)**

(56) Entgegenhaltungen:
| | |
|---|---|
| **EP-A- 0 762 596** | **DE-A- 4 115 338** |
| **DE-A- 19 733 212** | **DE-A- 19 747 412** |
| **DE-A- 19 827 556** | **DE-A1- 19 849 889** |

## Beschreibung

Technisches Gebiet

Bei Generatoren, die bei Kraftfahrzeuganwendungen zum Einsatz gelangen, sind die Anforderungen an die Dynamik des Drehmomentes nicht sonderlich hoch. Das Drehmoment darf bei solchen, im Kraftfahrzeug einzusetzenden Generatoren nicht zu rasch anwachsen, da sonst ein leistungsstarker Generator im Extremfall den Verbrennungsmotor des Kraftfahrzeuges abwürgen könnte. Werden Generatoren als Klauenpolgeneratoren konstruiert und eingesetzt, werden diese mit einer Diodenbrücke betrieben. Zur Leistungssteigerung gibt es jedoch Ansätze, diese Maschinen auch an einen Pulswechselrichter zu betreiben. Neben der Forderung eines optimalen Wirkungsgrades für alle Betriebspunkte des Generators, stellt sich hierbei die Frage nach einer geeigneten Regelung des Generators über den gesamten Drehzahl- und Leistungsbereich.

Stand der Technik

Bei heutigen Anwendungsfällen von Klauenpolgeneratoren werden diese weitestgehend mit nachgeschalteter B6-Gleichrichterbrücke betrieben. In diesem Falle bieten elektrische Maschinen wie beispielsweise ein Klauenpolgenerator Vorteile, so unter anderem eine kostengünstige Herstellbarkeit. Die Vorteile des Klauenpolgeneratorprinzips sollen möglichst beibehalten werden, wenn zur Leistungssteigerung der verwendeten Klauenpolgeneratoren diese Bauart von Generatoren mit Puls-Weiten-Modulation-Umrichtern betrieben wird. Dadurch lassen sich die Klauenpolgeneratoren auch im elektrisch motorischen Sinne betreiben. Das eröffnet dieser Generatorbauart interessante Einsatzperspektiven für den Startvorgang eines Kraftfahrzeuges, die Getriebesynchronisationen sowie weiterer Kfz-spezifischer Anwendungsfälle.

Neben einem Generatorbetrieb einer Klauenpolmaschine läßt sich diese auch im Motorbetrieb betreiben, wobei der Umrichter von diesem Wechsel des Betriebsmodus unberührt bleibt. Mittels des Reglers besteht eine Eingriffsmöglichkeit auf die elektrische Maschine, nämlich auf den Erregerstrom und den Ständerstrom. Damit läßt sich nicht nur eine Feldschwächung, sondern auch eine Gegendurchflutung im Ständer der elektrischen Maschine in Längsrichtung gesehen realisieren. Ferner kann durch Reduzierung des Erregerstroms des Polrades ein echter Feldschwächbetrieb eingerichtet werden. Bei der Klauenpolmaschine besteht eine ausgeprägte magnetische Einachsigkeit, die stark vom eingestellten Betriebspunkt abhängig ist und daher die Regelbarkeit einer solchen elektrischen Maschine beeinflußt.

Aus EP O 762 596 A1 ist eine KfZ-Generator-Regelung bekannt, die einen Gleichstrom bereitstellt, welche an einem Gleichstromausgang abgegriffen werden kann. Eine Dreiphasen-Ständerwicklung hat drei Ausgangsklemmen; ein Rotor ist mit den Ständerwicklungen magnetisch gekoppelt, in welchem eine elektromotorische Kraft erzeugt wird. Zwischen dem Gleichstromausgang und den drei Ausgangsklemmen der Ständerwicklung ist eine Gleichrichterbrücke geschaltet, die mittels eines Controllers gesteuert wird, um den Phasenversatz zwischen der elektromotorischen Kraft in der Ständerwicklung und den Strangspannungen der Ausgangsklemmen der Ständerwicklung zu steuern.

Anstelle von Dioden in Gleichrichterbrücken werden ansteuerbare Schaltelemente eingesetzt, die über eine separate Ansteuervorrichtung ansteuerbar sind.

Aus DE 198 49 889 A1 ist ein Verfahren zur leistungs- und wirkungsgradoptimierten Regelung von Drehstromgeneratoren, mit einer zugeordneten Umrichterbrücke, insbesondere Synchronmaschinen bekannt, bei dem wenigstens drei Regelbereiche definiert werden, innerhalb derer die Regelung des Generators nach unterschiedlichen Kriterien erfolgt. Die Festlegung der Regelbereiche erfolgt insbesondere drehzahlabhängig und abhängig von der gewünschten Sollleistung. Die Regelung erstreckt sich dabei sowohl auf den Erregerstrom als auch auf den Ständerstrom und wird mittels verschiedener, miteinander Informationen austauschender Regler durchgeführt.

Darstellung der Erfindung

Mit dem erfindungsgemäß vorgeschlagenen Regelverfahren gemäß Anspruch 1 für eine elektrische Maschine, läßt sich durch eine gezielte Übersteuerung der Pulsweitenmodulation ein sicherer Übergang vom sinusförmigen Regelbetrieb in den Blockbetrieb und weiter in einen zweiten Regelbereich erzielt werden. Da die Regelstrategie für die an der Klauenpolmaschine sich einstellende Regelbereiche drei verschiedenen Regelbereichen und deren Anforderungen gerecht werden muß, müssen die Grenzen der aneinander angrenzenden Regelbereiche erkannt werden, so daß ein Umschalten von einer Regelstrategie auf die andere ohne größere Probleme durchgeführt werden kann. Mit einund derselben Regelstruktur, PI-Bausteine enthaltend, kann vom Regelbereich einer feldorientierten Regelung zum Regelbereich, in dem nach Feldschwächung geregelt wird, übergangen werden, ohne einen anderen Regler einsetzen zu müssen. Der Wechsel der Regelbereiche erfolgt ruckfrei und damit unmerklich für den außenstehenden Beobachter. Im Gegensatz zu bisherigen Regelverfahren, die weitestgehend auch mit sinusförmig verlaufenden Spannungen und Strömen arbeiten, wird im erfindungsgemäßen Regelverfahren auf Blockspannungen übergegangen, die eine bessere Spannungsausnutzung ermöglichen.

Neben einem Grunddrehzahlbereich läßt sich automatisch ein Feldschwächbetrieb realisieren, da sich der Längsstrom in der elektrischen Maschine aufgrund der Maschineneigenschaften automatisch einstellt. Bei bisherigen Regelverfahren von Generatoren, die in Kraftfahrzeugen eingesetzt werden, wird auf tabellarisch niedergelegte Zusammenhänge von Drehzahl der Verbrennungskraftmaschine, Netzspannung und der gewünschten Ausgangsleistung zurückgegriffen, die mit den Sollströmen des einzusetzenden Generators korreliert sind. Dabei wird eine Stromregelung über den gesamten Regelbereich des Generators vorausgesetzt, was jedoch bei Betrieb der elektrischen Maschine mit einem Umrichter nur mit Spannungsreserve möglich ist. Da der Umrichter durch die Umrichterdeckenspannung begrenzt ist, muß zu dieser Spannung eine Reserve eingehalten werden, wodurch sich die Leistungsabgabe reduziert. Diese Begrenzung kann durch den Einsatz des erfindungsgemäß vorgeschlagenen Verfahrens überwunden werden.

Zeichnung

Anhand der Zeichnung wird die Erfindung nachstehend detailliert erläutert.

Es zeigt:

Figur 1    eine elektrische Maschine mit nachgeordneter Umrichterbrücke,

Figur 2    drei Regelbereiche einer elektrischen Maschine, den feldorientierten Regelbereich, den Feldschwäch-Regelbereich sowie den Diodenbetrieb-Regelbereich,

Figur 3    die Regelstruktur für eine im feldorientierten Regelbereich liegende Regelung einer elektrischen Maschine,

Figur 4    eine Steuerregler-Konfiguration für ein d, q-System,

Figur 5    eine vereinfachte Darstellung eines Entkopplungnetzwerkes als Teil eines d, q-Systems,

Figur 6    eine Stromregler-Konfiguration für die Regelbereiche der feldorientierten Regelung und des Feldschwächungsbetriebes mit Ausgangswertbegrenzung und Vorsteuerungsabzweig.

Ausführungsvarianten

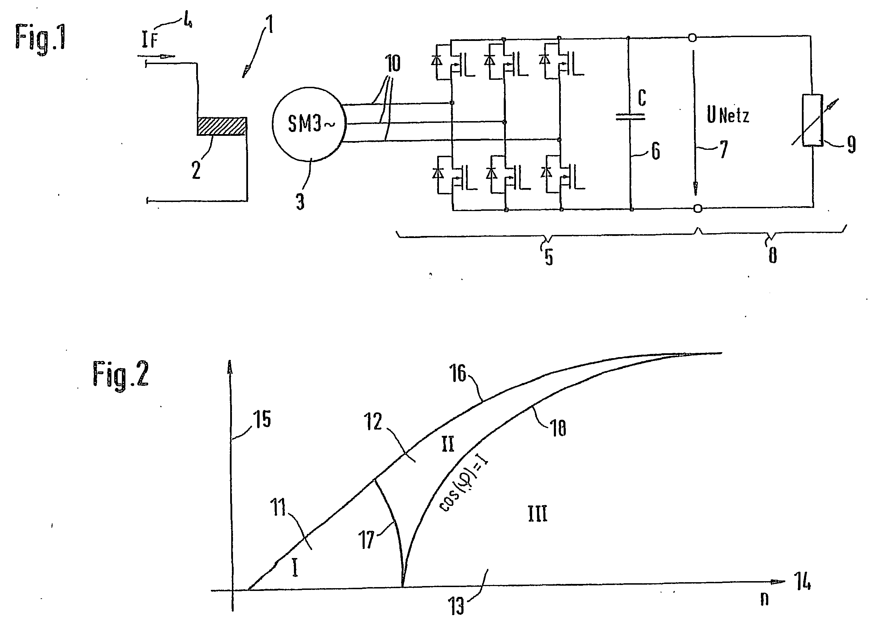

Aus Fig. 1 geht eine elektrische Maschine mit nachgeordneter Umrichterbrücke, die vorzugsweise als B6-Gleichrichterbrücke geschaltet sein kann, hervor.

Die elektrische Maschine 1 - hier nur schematisch durch eine Erregerwicklung 2 und eine Ständerwicklung 3 dargestellt - ist über Strang-Anschlußklemmen 10 mit einer Gleichrichterbrücke 5 verbunden. Der in der Erregerwicklung fließende Strom $i_F$ ist mit Bezugszeichen 4 indentifiziert. Die Gleichrichterbrücke 5 muß bei Regelung der elektrischen Maschine 1 im Diodenbetrieb 13 (entspricht Regelbereich III) nicht gesteuert werden. Die Leistungsabgabe wird im Regelbereich 13 durch den Erregerstrom geregelt. Eine Regelung in diesem Regelbereich über die Ständerströme erfolgt erst dann wieder, wenn die geforderte elektrische Leistung im Regelbereich 13, dem Regelbereichdiodenbetrieb, nicht mehr erreicht werden kann. Der Regelbereich 13 wird dann verlassen.

Parallel zur Netzspannung $U_{netz}$, gekennzeichnet durch Bezugszeichen 7, ist eine Kapazität 6 geschaltet, sowie eine veränderliche Last 8, angedeutet durch einen verstellbaren ohmschen Widerstand 9.

Aus der Darstellung gemäß Fig. 2 geht die Lage der Regelbereiche feldorientierte Regelung, Feldschwächbetrieb sowie Diodenbetrieb hervor.

In der Darstellung gemäß Fig. 2 ist der Regelbereich I für die feldorientierte Regelung begrenzt durch die Leistungsgrenze 16 der elektrischen Maschine 1 sowie durch deren Spannungsgrenze 17. In diesem Bereich besteht ein linearer Zusammenhang von Drehzahl 14 zu abgegebener elektrischer Leistung 15 im Generatorbetrieb der elektrischen Maschine 1.

Der Feldschwächbereich II, identifiziert durch Bezugszeichen 12, ist nach unten vom Verlauf des Leistungsfaktors $\cos\varphi = 1$ (bzw. = - 1), nach oben hingegen durch die Leistungsgrenze 16 sowie durch die Spannungsgrenze 17 begrenzt.

Der Diodenbetrieb III, Bezugszeichen 13, findet seine Begrenzung im Verlauf 18 des Leistungsfaktors $\cos\varphi = 1$ (bzw. = - 1), der sich asymptotisch an den Verlauf 16 der Leistungsgrenze der elektrischen Maschine 1 annähert.

Der Regelbereich I, Bezugszeichen 11 entspricht einer feldorientierten Regelung. In diesem Bereich erreicht die Klemmenspannung der elektrischen Maschine 1 noch nicht die Deckenspannung (die maximal mögliche Ausgangsspannung maschinenseitig) der Umrichterbrücke 5. Der maximale Wirkungsgrad der elektrischen Maschine 1 wird erreicht, wenn im Ständer 3 bei konstanter Leistungsabgabe der minimale Strom fließt. Wird die magnetische Einachsigkeit, die einer Klauenpolmaschine eigen ist, zunächst vernachlässigt, ist dies erreicht, wenn im Ständer 3 ein reiner Querstrom iq fließt und der Längsstrom $i_d$ zu 0 wird. Im Regelbereich I (Bezugszeichen 11) ist die Umrichterbrücke 5 noch nicht an ihrer Spannungsgrenze angelangt und kann den gewünschten Ständerstrom einstellen. Der Erregerstrom $i_F$ wird auf seinen maximalen Wert eingestellt, wodurch erreicht wird, daß für die geforderte elektrische Leistung ein Minimum an Ständerstrom erforderlich wird. Die Verluste in der Ständerwicklung 3 überschreiten bei weitem die Erregerverluste, daher ist es günstig, den Erregerstrom $i_F$ auf den Maximalwert zu steigern und den Ständerstrom zu minimieren, um den Wirkungsgrad zu optimieren. Das maximale Moment ist durch den maximalen Ständerstrom beschränkt, die Leistung nimmt linear mit der Drehzahl 14 zu.

Der mit II gekennzeichnete Regelbereich entspricht dem Feldschwächbereich 12. Der Bereich II wird erreicht, wenn die Maschinenspannung der elektrischen Maschine 1, die Deckenspannung d. h. den Maximalspannungswert des Umrichters 5 erreicht hat. Der Umrichter 5 kann die Spannung an den Klemmen 10 nicht mehr weiter steigern. Durch einen Längsstrom $i_d$ in der elektrischen Maschine 1 wird ein Feldschwächbereich realisiert. Der Erregerstrom $i_F$ bleibt aber auf seinem maximalen Wert, um einen minimalen Ständerstrom zu erreichen, was günstige Auswirkungen auf den mit der elektrischen Maschine 1 erzielbaren Wirkungsgrad hat. Durch die Leistungsgleichung

$$P = \frac{3}{2} \cdot i_q \cdot u_p$$

wird deutlich, daß die Leistung nicht durch den Ständerlängsstrom $i_d$ beeinflußt wird, sondern durch den Ständerquerstrom $i_q$. Jedoch muß mit wachsender Drehzahl 14 der Querstrom iq der elektrischen Maschine reduziert werden, da der Ständer zusätzlich einen Längsstrom $i_d$ führen muß.

$$I_{eff} = \sqrt{\tfrac{1}{2}\left(i_d^2 + i_q^2\right)}$$

Der Querstrom iq der elektrischen Maschine ist wegen des Generatorbetriebes negativ. Der Längsstrom $i_d$ ist ebenfalls negativ, um eine Feldschwächung zu erreichen.

Der dritte Regelbereich, gekennzeichnet mit dem Bezugszeichen 13, entspricht dem Diodenbetrieb der Umrichterbrücke 5.

Wenn der Längsstrom $i_d$ in der elektrischen Maschine 1 ein Wert erreicht, bei dem der Leistungsfaktor cosφ der elektrischen Maschine 1 den Wert -1 erreicht hat, ist eine Änderung der Regelstruktur angezeigt. Der Regelbereich 2 des Feldschwächbetriebes könnte durchaus weiter zu höheren Drehzahl hin fortgesetzt werden, jedoch wird ein besserer Wirkungsgrad an der elektrischen Maschine 1 dann erzielt, wenn der Erregerstrom 4 der elektrischen Maschine 1 reduziert wird. Bei der Randbedingung einer konstanten Klemmenspannung 10 erreicht der Wirkungsgrad ein Maximum, wenn der Leistungsfaktor cosφ den Wert 1 (-1) (Generatorbetrieb) erreicht. Strom und Spannung sind dann in Phase und für den Fall konstanter Netzspannung $u_{Netz}$ (Dachspannung der Umrichterbrücke 5) ist der Strangstrom dann am geringsten und somit die Verlustleistung auch am geringsten. Der Diodenbetrieb entspricht dem heutigen Betrieb eines Generators mit B6-Diodenbrücke. Die Regelung der Abgabeleistung erfolgt über den Erregerstrom $i_F$, Bezugszeichen 4, an der Erregerwicklung 2. Die Randbedingung maximaler Klemmenspannung 10 bei cosφ = -1 wird durch die Gleichrichterbrücke bereits erfüllt. Im Regelbereich III (Diodenbetrieb) ist die Ventilansteuerung deaktiviert. Die Brückenventile der Umrichterbrücke 5 schalten nicht, die Umrichterbrücke wird durch die Paralleldioden zum einfachen Diodengleichrichter. Der Regler läuft weiter mit, ohne jedoch in die Umrichterbrücke 5 einzugreifen, erst wenn die Bedingung für den Regelbereich III unterschritten wird, schalten die Brückenventile. Die Regelung der Ständerströme über die Steuerung der Klemmenspannung 10 wird in diesem Regelbereich sinnvollerweise ausgeschaltet. Die weitere Regelung der elektrischen Maschine erfolgt über den Erregerstrom $i_F$, Bezugszeichen 4. Die Regelung der Ständerströme R, S, T ist erst dann wieder zuzuschalten, wenn die geforderte elektrische Leistung 15 im Regelbereich 3, Bezugszeichen 13 nicht mehr erreicht werden kann.

Bei Diodenbetrieb können die Diodendurchlaßverluste dadurch reduziert werden, daß während der Durchlaßzeit der Dioden parallel der Feldeffekttransistor durchgeschaltet wird. Die Durchlaßverluste eines Feldeffekttransistors sind wesentlich geringer im Vergleich mit den Diodendurchlaßverlusten, die an der Umrichterbrücke 5 gemäß Fig. 1 erzeugt werden. Somit kann die entstehende Verlustleistung der elektrischen Maschine 1 im Generatorbetrieb reduziert werden, was zu Vorteilen bei der Maschinenkühlung führt.

Das Zu- bzw. Abschalten der Ventile der Umrichterbrücke 5 kann entweder direkt in Abhängigkeit von dem gemessenen Strom gesteuert werden oder aber, indem die Längsund Querspannung $U_d$ bzw. Uq entsprechend in gemessenen Längs- und Querströmen, d. h. $I_d$ bzw. $I_q$ vorgegeben wird.

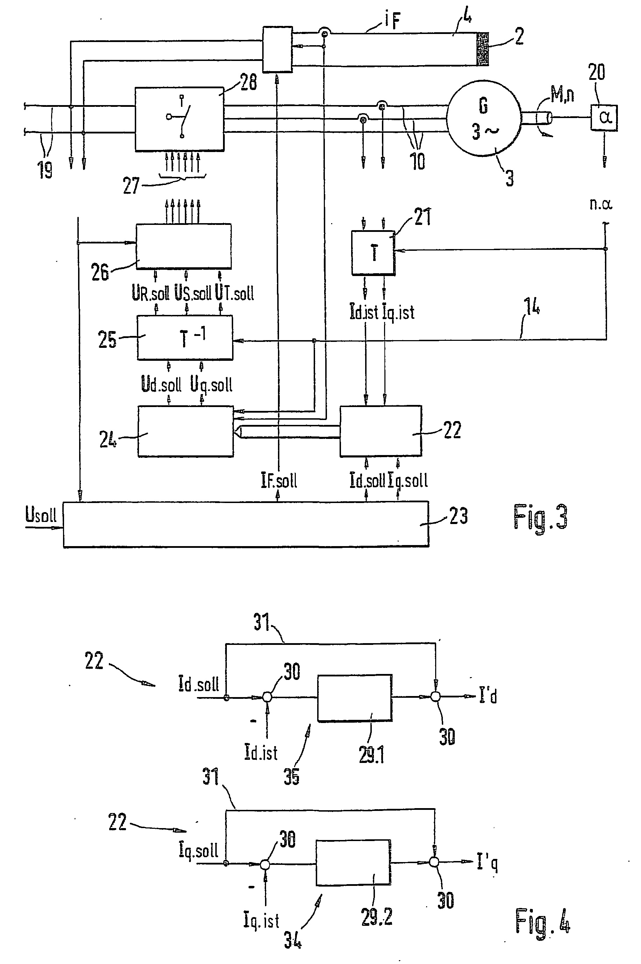

In Fig. 3 ist die Regelstruktur für eine im feldorientierten Regelbereich I liegende Regelung der elektrischen Maschine 1 angegeben.

Im Regelbereich 11 der feldorientierten Regelung der elektrischen Maschine 1 wird der Erregerstrom 4 auf seinen Maximalwert eingestellt. Bei kalter Erregerwicklung 2 kann der Erregerstrom erhöht werden und die elektrische Maschine in ihrer Leistung erheblich gesteigert werden. Aus einer am übergeordneten Spannungsregler 23 ermittelten Spannungsabweichung $\Delta U = U_{soll} - U_{ist}$ wird über einen Netzfaktor eine geforderte Netzleistung ermittelt die sich gemäß $P_{soll} = K \cdot \Delta U$ ergibt. Aus dieser Solleistung und der gemessenen Maschinendrehzahl 14 - ermittelt über einen Lagegeber 20 - kann der für diese Leistung notwendige Strom in der Querachse abgeleitet werden gemäß

$$I_{q,soll} = \frac{2 \cdot P_{soll}}{3 \cdot u_p} = \frac{K\left(U_{soll} - U_{ist}\right)}{3 \, p \cdot \pi \cdot N \cdot L_{Fd} \cdot I_F} \qquad (\text{Gl.1})$$

Für den Generatorbetrieb sind $P_{soll}$ und Iq, soll negativ zu wählen. Der Summenstrom $I_1$ ist auf einen Maximalwert zu beschränken um die elektrische Maschine 1 nicht zu überlasten. Der Strom wird gemessen und kann in einem übergeordneten Spannungsregler 23 begrenzt werden, indem die elektrische Leistung 15 zurückgenommen wird.

An der elektrischen Maschine 1 können die Ist-Werte des Längsstromes $I_d$ und des Querstromes Iq nicht direkt gemessen werden. Die gemessenen momentanen Werte der Klemmengrößen 10 werden zunächst durch eine Transformation 21 in das d, q-System übertragen. Da nur zwei der drei Strangströmen gemessen werden, kann mit der Bedingung

$$i_R + i_S + i_T = 0$$

die Transformation in folgender Form geschrieben werden:

$$I_{d,ist} = \tfrac{2}{\sqrt{3}} \cdot \left(i_{R,ist} \cdot \cos\!\left(p \cdot \alpha - 30^o\right) + i_{S,ist} \cdot \cos\!\left(p \cdot \alpha - 90^o\right)\right)$$

und

$$I_{q,ist} = -\tfrac{2}{\sqrt{3}} \cdot \left(i_{R,ist} \cdot \sin\!\left(p \cdot \alpha - 30^o\right) + i_{S,ist} \cdot \sin\!\left(p \cdot \alpha - 90^o\right)\right)$$

Die Ausgangsgrößen der Transformationsstufe 21 $I_{d,ist}$, bzw. $I_{q,ist}$ werden an einen Stromregler 22 übertragen. Der Stromregler 22 kann aufgeteilt sein in eine Regelung für den Querstrom 34 bzw. eine Regelung für den Längsstrom 35. Die beiden Regelbausteine 29.1, 29.2 können einfache PI-Regler mit einer Vorsteuerung 31 sein. Den Reglerausgängen wird an einem Summationspunkt 30 jeweils die Vorsteuerung mit einem Verstärkungsfaktor 1 überlagert:

$$I_d^{'} = I_{dsoll} + i_{d\,\text{Re}\,gler}$$

$$I_q^{'} = I_{qsoll} + i_{q\,\text{Re}\,gler} \cdot$$

Diese Ausgangsgrößen des unterlagerten Stromreglers 22 werden auf ein Entkopplungsnetzwerk 24 gegeben, welches mit dem Stromregler in Reihe geschaltet ist. Dies erlaubt nicht nur eine Vorsteuerung, sondern insbesondere auch eine Aufhebung der gegenseitigen Kopplung der beiden Regler 34, 35 für den Querstrom bzw. den Längsstrom über die unterlagerte Spannungssteuerung und die elektrische Maschine 1.

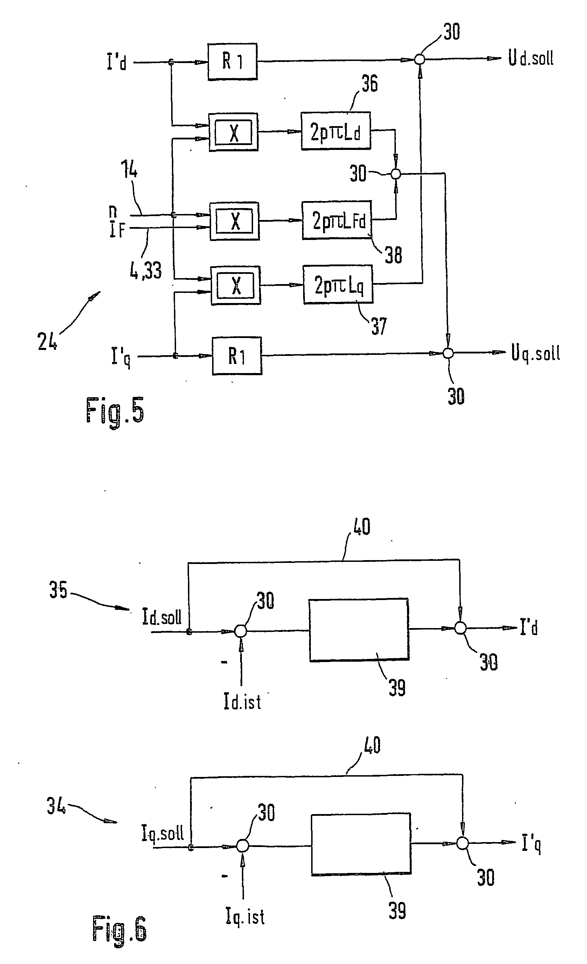

Das Entkopplungsnetzwerk 24 ist als Teil des d, q-Systems in Figur 5 näher beschrieben.

Aus der Darstellung gemäß Fig. 5 geht hervor, daß die Ausgangsgrößen des Stromreglers 22 als Stromwerte an das Entkopplungsnetzwerk 24 übertragen werden, aus denen die erforderlichen Spannungswerte für die elektrische Maschine 1 ermittelt werden. Im Entkopplungsnetzwerk 24 ist ein vereinfachtes Modell der elektrischen Maschine enthalten, anhand dessen sich die erforderlichen Spannungen $U_{d,soll}$ bzw. $U_{q,soll}$ ermitteln lassen. Eingangsgrößen des Entkopplungsnetzwerkes sind die bereits angesprochenen Stromwerte des Stromreglers 22 $I'_d$, $I'_q$, die Drehzahl n

(Bezugzeichen 14), abgegriffen am Lagegeber 20, sowie der Erregerstrom $I_F$ der Erregerwicklung 2 der elektrischen Maschine 1.

Das Modell der elektrischen Maschine gemäß Fig. 5 kann vereinfacht werden, für den Fall, daß der Erregerstrom $I_F$ als konstant betrachtet wird und das Modell auf den stationären Betrieb beschränkt wird.

Bei den hier vorgesehenen Anwendungen als Kraftfahrzeuggenerator werden keine extremen Anforderungen an die Dynamik der Stromregelung gestellt. Daher ist eine statische Betrachtung eines Entkopplungsnetzwerkes 24 wie in Fig. 5 dargestellt hinreichend. Das Modell des Entkopplungsnetzwerkes 24 ist unempfindlich gegen Modellungenauigkeiten und Parameterfehler. Mittels der Stromregelung 22 lassen sich Fehler in den Maschinenparametern des Entkopplungsnetzwerkes 24 gemäß Fig. 5 ausgleichen, die Sollwerte der Ströme werden erreicht, da diese sich mit der Stromregelung 22 regeln lassen. Bei starker Abweichung der Maschinenparameter leidet die Qualität der Stromregelung, die Dynamik verschlechtert sich, daß das Entkopplungsnetzwerk 24 dann nicht mehr für eine komplette Entkopplung der beiden Regler 34 bzw. 35 in d- und q-Richtung, bezogen auf die Ständerwicklung 3, sorgt. Die Regler 34 bzw. 35 beeinflussen sich gegenseitig. Eine spürbare Verschlechterung der Regelergebnisse der Stromregelung 22 stellt sich hingegen erst bei einer groben Abweichung der Parameter ein.

Die Sollwerte für die Spannungen der Maschine gemäß des d, q-Systemes werden an eine Rücktransformationsstufe 25 übertragen, wo sie auf die Klemmengrößen R, S, T der elektrischen Maschine 1 rücktransformiert werden. Die Amplitudenwerte des d, q-Systemes können in einfacher Weise in die drei Sollwerte der Strangspannungen umgerechnet werden, wenn die Lage des Läufers $\alpha$ verwendet wird, welche über den Lagegeber 20 einfach zu ermitteln ist.

Die Grenze des feldorientierten Regelbereiches 11 steht im Dachwert der Sollwert $U_{soll}$ (die Strangspannung bei Sternschaltung des Ständers) wenn dieser die halbe Netzspannung $U_{Netz}/2$ erreicht. In diesem Falle ist der lineare Bereich der Spannungssteuerung (Pulsweitenmodulation) erreicht. Der lineare Bereich kann um bis zu 15 % erhöht werden auf

$$U_{soll} = U_{Netz}/\sqrt{3}$$

durch eine Nullspannungsaufschaltung. Wird die Pulsweitenmodulation 26 hingegen übersteuert, d. h. der Umrichter 5 wird mit höheren Sollspannungen angesteuert, lassen sich Grundwellen im Strang der elektrischen Maschine 1 bis zu 27 % über den Werten der Sinusspannungen erzielen. Die Pulsweitenmodulation 26 erzeugt in ihrem nichtlinearen Bereich $U_{soll} > \frac{1}{2} U_{Netz}$ durch Übersteuerung einer Ausgangsspannung mit der Grundwelle bei einer Übersteuerung von 2, eine Ausgangsgrundwelle von 0,609 $U_{Netz}$, sowie bei einer Übersteuerung von 5 eine Ausgangsgrundwelle von 0,632 $U_{Netz}$. Der theoretisch erzielbare Werte ist damit zu 99,3 % erreicht.

Im Regelbereich II bleibt der Erregerstrom 4 der elektrischen Maschine 1 weiterhin auf seinem Maximalwert, die Umrichterbrücke 5 arbeitet in der Grundfrequenzsteuerung. Die Schaltfrequenz der Umrichterventile entspricht der Grundwellenfrequenz der elektrischen Maschine 1. Die Eingriffsmöglichkeit in die Leistungsabgabe besteht in der Variation des Lastwinkels $\varphi$.

Die Regelbereiche 11 bzw. 12 gemäß Fig. 2 können durch dieselbe Regelstrukhu abgedeckt werden. Es ist kein Umschalten der Regelung erforderlich. Durch gezielte Übersteuerung der Pulsweitenmodulation 26 ist der Bereich 12 abgedeckt und gleichzeitig erfolgt der Übergang zur Grundfrequenzsteuerung durch eine Übersteuerung des Pulsweitenmodulationsgenerators 26.

Aus der Darstellung gemäß Fig. 6 ist ein Stromregler für die Bereiche 11 und 12 gemäß der Darstellung der Regelbereiche aus Fig. 2 dargestellt. Wird der Längsstrom $I_d$ auf ungefähr 0 vorgegeben, läßt sich dieser im Regelbereich II (Bezugszeichen 12) in der Längsachse nicht mehr auf seinem Sollwert eingestellt halten. Die Regeldifferenz im Regler des Längsstroms $I_d$ wird positiv, so daß der Reglerausgang auf einen Maximalwert zu beschränken ist

$$I_{d,soll} = 0 \qquad I_{d,ist} < 0 \qquad \text{und} \qquad I'_d = I'_{d,max} > 0.$$

$I_{q,soll}$ wird ebenfalls nach der obigen Näherung (Gl. 1) vorgegeben. Der Stromregler 34 für den Querstrom Iq gemäß Fig. 6 ist auf einen entsprechend höheren Wert zu beschränken. Der Regler 34 beginnt zu übersteuern und stellt den Querstrom wieder richtig ein. Durch diese Regelung wird der Querstrom korrekt eingestellt, der Längsstrom $I_d$ stellt sich frei ein. Er nimmt die für den jeweiligen Betriebspunkt der elektrischen Maschine erforderlichen Wert für den Längsstrom automatisch an.

Das Entkopplungsnetzwerk 24 rechnet die Stromwerte der Regler 34, 35 in die entsprechenden Sollspannungen für die elektrische Maschine um. Dabei wird wieder das Entkopplungsnetzwerk gemäß Fig. 5 für den stationären Betrieb zugrunde gelegt. Die Stromregelung mit den Stromreglern 34 bzw. 35 für Querstrom und Längsstrom führt zu einer Spannungsverschiebung in Richtung auf die Längsspannung $U_d$. Die Verschiebung der Spannungswerte in Richtung auf $U_d$ ist erwünscht, da hierdurch Uq die Spannung in Querrichtung reduziert wird und somit $I_d$ der Längsstrom weiter in den negativen Wertbereich verschoben werden kann. Dies bedeutet eine sich einstellende Feldschwächung durch den Ständerstrom. Der Übersteuerungswert ist so zu wählen, daß der gesamte Regelbereich II (Regelbereichfeldschwächung mit Bezugszeichen 12) abgedeckt werden kann.

Im Regelbereich III, Bezugzeichen 13 gemäß Fig. 2 wird die Ventilansteuerung an der Umrichterbrücke 5 deaktiviert. Die Brückenventile schalten nicht mehr, die Umrichterbrücke 5 wird in diesem Regelbereich Diodenbetrieb durch die Paralleldioden zum einfachen Diodengleichrichter. Der Regler läuft weiter mit, ohne jedoch in die Umrichterbrücke 5 regelnd einzugreifen. Die Regelung der Ständerströme über die Steuerung der Klemmenspannung 10 wird in diesem Regelbereich 13 sinnvollerweise ausgeschaltet. Die weitere Regelung erfolgt über den Erregerstrom 4 an der Erregerwicklung 2 der elektrischen Maschine 1. Die Regelung der Ständerströme R, S, T ist erst dann wieder zuzuschalten, wenn die geforderte Leistung im Regelbereich 13 nicht mehr erreicht werden kann.

Selbstverständlich kann nach diesem Verfahren, ohne jedoch den Regelbereich III 13, auch eine permanent erregte Maschine geregelt werden. Der Bereich des Regelbereiches III kann hierbei voll durch einen Feldschwächbereich (Regelbereich II) abgedeckt werden. $I_F$ ist dann als eine Konstante anzusehen. Das Regelverfahren ist sowohl für generatorischen, als auch für motorischen Betrieb möglich.

Bezugszeichenliste

| | |
|---|---|
| 1 | Elektrische Maschine |
| 2 | Erregerwicklung |
| 3 | Ständerwicklung |
| 4 | Erregerstrom $I_F$ |
| 5 | Umrichterbrücke |
| 6 | Kapazität |
| 7 | Klemmenspannung |
| 8 | Last |
| 9 | verstellbarer Widerstand |
| 10 | Phasenstrang |
| 11 | 1. Regelbereich (feldorientierte Regelung) |
| 12 | 2. Regelbereich (Feldschwächbereich) |
| 13 | 3. Regelbereich (Diodenbetrieb) |
| 14 | Drehzahl |
| 15 | Leistung |
| 16 | Leistungsgrenze |
| 17 | Spannungsgrenze |
| 18 | Leistungsfaktor cosφ |
| 19 | Netzanschlüsse |
| 20 | Lagegeber n, α |
| 21 | Strommeßeinrichtung |
| 22 | Stromregler |
| 23 | Spannungsregler |
| 24 | Entkopplungsnetzwerk |
| 25 | Transformations R, S, T |
| 26 | PWM-Generator |
| 27 | Steuersignale |
| 28 | Schaltelement |
| 29.1 | PI-Baustein |
| 29.2 | PI-Baustein |
| 30 | Summationspunkt |
| 31 | Vorsteuerungsabzweig |
| 32 | Drehzahlsignal |
| 33 | Erregerstrom |
| 34 | Querstromregler |
| 35 | Längsstromregler |
| 36 | Längsinduktivität |
| 37 | Querinduktivität |
| 38 | weitere Induktivität |
| 39 | PI Baustein mit Begrenzung |
| 40 | Vorsteuerung |

**Patentansprüche**

1. Verfahren zur Regelung einer elektrischen Maschine (1), eine Erregerwicklung (2) sowie eine Ständerwicklung (3) umfassend, wobei der Ständerwicklung (3) an deren Ausgangsklemmen (10) eine Umrichterbrücke (5) nachgeordnet ist, und die elektrische Maschine (1) in den Regelbereichen feldorientierte Regelung (11), Feldschwächbetrieb (12) und Diodenbetrieb (13) betreibbar ist, **dadurch gekennzeichnet, daß** der Übergang vom Regelbereich (11) zu einem benachbarten Regelbereich (12) durch eine Übersteuerung der Pulsweitenmodulation (26) und eine Begrenzung der Ausgänge von Stromreglern (34, 35) der Ständerwicklungen (3) der elektrischen Maschine (1) sowohl im Generator - als auch im Motorbetrieb - erfolgt.

2. Verfahren gemäß Anspruch 1, **dadurch gekennzeichnet, daß** die an den Ausgangsklemmen (10) der elektrischen Maschine (1) gemessenen Stromwerten von RST-System (1) mittels einer Transformationsstufe (21) in ein d, q-System (22, 24, 25) übertragen werden.

3. Verfahren gemäß Anspruch 1, **dadurch gekennzeichnet, daß** die Begrenzung der Ausgänge der Stromregler (34, 35) im Entkopplungsnetzwerk erfolgt, die auf die Induktivitäten (36, 37) der Ständerwicklung (3) wirken.

4. Verfahren gemäß Anspruch 1, **dadurch gekennzeichnet, daß** die Stromregelung der elektrischen Maschine (1) in eine Querstromregelung (34) und eine Längsstromregelung (35) der Ständerwicklung (3) mit PI-Bausteinen (29.1, 29.2; 39) aufgeteilt wird.

5. Verfahren gemäß Anspruch 4, **dadurch gekennzeichnet, daß** die PI-Bausteine der Stromregler (34, 35) einen auf einen ausgangsseitig vorgesehenen Summationspunkt (30) aufgeschaltete Vorsteuerung (31, 40) umfassen.

6. Verfahren gemäß Anspruch 4, **dadurch gekennzeichnet, daß** die Stromregler (34, 35) mit ihren Ausgängen auf die Eingänge eines Entkopplungsnetzwerkes (24) aufgeschaltet sind und eine Vorsteuerung der elektrischen Maschine (1) zulassen.

7. Verfahren gemäß Anspruch 4, **dadurch gekennzeichnet, daß** die Stromregler (34, 35) und das Entkopplungsnetzwerk (24) in Reihe geschaltet sind.

8. Verfahren gemäß Anspruch 2, **dadurch gekennzeichnet, daß** die Ausgangsgrößen $U_{d,soll}$, $U_{q,soll}$ des im d, q-System enthaltenen Entkopplungsnetzwerkes (24) mittels einer Rücktransformationsmatrix (25) auf die Klemmenwerte (10) des RST-Systems (1) rücktransformiert werden.

9. Verfahren gemäß Anspruch 4, **dadurch gekennzeichnet, daß** die Ausgangswerte für den Querstrom $i_{q,soll}$ am Stromregler (34) beschränkt werden und sich der Längsstrom $i_d$ an der Ständerwicklung (3) frei einstellen kann.

10. Verfahren gemäß Anspruch 1, **dadurch gekennzeichnet, daß** bei Betrieb der elektrischen Maschine (1) im Diodenbetrieb (13) die Umrichterbrücke (5) als Diodengleichrichter betrieben wird.

11. Verfahren gemäß Anspruch 10, **dadurch gekennzeichnet, daß** im Diodenbetrieb ab $\cos\varphi =- 1$ die Ventile gesperrt werden.

12. Verfahren gemäß Anspruch 1, **dadurch gekennzeichnet, daß** während der Durchlaßzeit der Diodenfeldeffekt Transistoren durchgeschaltet werden und die Verlustleistung der elektrischen Maschine reduzieren.

**Claims**

1. Method for controlling an electrical machine (1) comprising a field winding (2) and a stator winding (3), with a converter bridge (5) being arranged downstream of the stator winding (3) at the output terminals (10) of the said stator winding, and it being possible to operate the electrical machine (1) in the control areas of field-oriented control (11), field-weakening mode (12) and diode mode (13), **characterized in that** the transition from the control area (11) to an adjacent control area (12) is made by overdriving the pulse-width modulation means (26) and limiting the outputs of current controllers (34, 35) of the stator windings (3) of the electrical machine (1) both in the generator mode and in the motor mode.

**2.** Method according to Claim 1, **characterized in that** the current values of the RST system (1) which are measured at the output terminals (10) of the electrical machine (1) are transmitted to a d,q system (22, 24, 25) by means of a transformation stage (21).

**3.** Method according to Claim 1, **characterized in that** the outputs of the current controllers (34, 35) are limited in the decoupling network, the said outputs acting on the inductors (36, 37) of the stator winding (3).

**4.** Method according to Claim 1, **characterized in that** the current control means of the electrical machine (1) is divided into traverse current control means (34) and longitudinal current control means (35) of the stator winding (3) with PI modules (29.1, 29.2; 39).

**5.** Method according to Claim 4, **characterized in that** the PI modules of the current controllers (34, 35) comprise a pilot control means (31, 40) which is connected to a summation point (30) which is provided at an output end.

**6.** Method according to Claim 4, **characterized in that** the current controllers (34, 35) are connected to the inputs of a decoupling network (24) by way of their outputs and permit pilot control of the electrical machine (1).

**7.** Method according to Claim 4, **characterized in that** the current controllers (34, 35) and the decoupling network (24) are connected in series.

**8.** Method according to Claim 2, **characterized in that** the output variables $U_{d,set}$, $U_{q,set}$ of the decoupling network (24) which is contained in the d,q system are transformed back to the terminal values (10) of the RST system (1) by means of a back-transformation matrix (25).

**9.** Method according to Claim 4, **characterized in that** the output values for the transverse current $i_{q,set}$ at the current controller (34) are limited and the longitudinal current $i_d$ at the stator winding (3) can be freely adjusted.

**10.** Method according to Claim 1, **characterized in that** the converter bridge (5) is operated as a diode rectifier during operation of the electrical machine (1) in the diode mode (13).

**11.** Method according to Claim 10, **characterized in that** the valves are shut starting from $\cos\varphi$ = -1 in the diode mode.

**12.** Method according to Claim 1, **characterized in that** field-effect transistors are switched on during the on-period of the diodes and reduce the power loss of the electrical machine.

**Revendications**

**1.** Procédé de régulation d'une machine électrique (1) qui présente un enroulement d'excitateur (2) et un enroulement de stator (3), un pont redresseur (5) étant disposé en aval des bornes de sortie (10) de l'enroulement de stator (3) et la machine électrique (1) pouvant être utilisée dans les plages de régulation que sont une régulation (11) à champ orienté, un fonctionnement (12) à faible champ et un fonctionnement (13) en diode,
**caractérisé en ce que**

la transition entre la plage de régulation (11) et une plage de régulation (12) voisine s'effectue par sur-commande de la modulation (26) de la largeur des impulsions et limitation des sorties des régulateurs de courant (34, 35) des enroulements de stator (3) de la machine électrique (1), et ce tant en fonctionnement en génératrice qu'en fonctionnement comme moteur.

**2.** Procédé selon la revendication 1, **caractérisé en ce que** les valeurs de courant mesurées par un système RST (1) sur les bornes de sortie (10) de la machine électrique (1) sont transférées en un système d, q (22, 24, 25) au moyen d'un étage de transformation (21).

**3.** Procédé selon la revendication 1, **caractérisé en ce que** la limitation des sorties des régulateurs de courant (34, 35) s'effectue dans le réseau de découplage, ces sorties agissant sur les inductances (36, 37) de l'enroulement de stator (3).

**4.** Procédé selon la revendication 1, **caractérisé en ce que** la régulation du courant de la machine électrique (1) est divisée en une régulation (34) du courant transversal et une régulation (35) du courant longitudinal de l'enroulement de stator (3) par des modules PI (29.1, 29.2; 39).

5. Procédé selon la revendication 4, **caractérisé en ce que** les modules PI des régulateurs de courant (34, 35) comprennent une pré-commande (31, 40) raccordée en un point d'addition (30) prévu du côté de la sortie.

6. Procédé selon la revendication 4, **caractérisé en ce que** les régulateurs de courant (34, 35) sont raccordés par leurs sorties aux entrées d'un réseau de découplage (24) et permettent une pré-commande de la machine électrique (1).

7. Procédé selon la revendication 4, **caractérisé en ce que** les régulateurs de courant (34, 35) et le réseau de découplage (24) sont raccordés en série.

8. Procédé selon la revendication 2, **caractérisé en ce que** les grandeurs de sortie $U_{d,soll}$, $U_{q,soll}$ du réseau de découplage (24) que contient le système d, q sont retransformées en les valeurs de bornes (10) du système RST (1) au moyen d'une matrice (25) de rétrotransformation.

9. Procédé selon la revendication 4, **caractérisé en ce que** les valeurs de sortie du courant transversal $i_{q,soll}$ du régulateur (34) sont limitées et **en ce que** le courant longitudinal $i_d$ du bobinage de stator (3) peut être ajusté librement.

10. Procédé selon la revendication 1, **caractérisé en ce que** lorsque la machine électrique (1) fonctionne en diode (13), le pont redresseur (5) fonctionne comme redresseur à diode.

11. Procédé selon la revendication 10, **caractérisé en ce qu'**en fonctionnement en diode, les soupapes sont bloquées à partir de cos $\varphi$= -1.

12. Procédé selon la revendication 1, **caractérisé en ce que** pendant la durée de passage des diodes, des transistors à effet de champ laissent passer le courant et réduisent la puissance de perte de la machine électrique.

# Fig.1

SM3~

U_Netz

C

1  2  3  5  6  7  8  9  10

# Fig.2

$\cos(\varphi) = 1$

I  II  III

n

11  12  13  14  15  16  17  18

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP O762596 A1

- DE 19849889 A1